# DEMANDE DE BREVET EUROPEEN

(11) **EP 0 782 892 A1**
(43) Date de publication de la demande: **09.07.1997**
(21) Numéro de dépôt: 96420363.2
(22) Date de dépôt: 26.12.1996
(51) Int. Cl.: B21D 37/20

(54) **Plaque support d'emporte-pièces**

(30) Priorité: 05.01.1996 FR 9600288
(71) Demandeur: COURBIS SYNTHESE S.A., 26106 Romans (FR)
(72) Inventeur: Courbis, Daniel, 26600 Beaumont Monteux (FR)
(74) Mandataire: Dupuis, François

(57) **Abrégé**

La plaque support d'emporte-pièces, est remaquable en ce qu'elle est fabriquée par moulage en une seule fois et d'une manière définitive en un matériau thermodurcissable, la plaque support (5) formant préforme étant de toutes dimensions et profils. Avantageusement, le matériau thermodurcissable est choisi dans la famille des polydicyclopentadiène, connu sous les marques "TELENE" ou "MASTERSHOCK".

## Description

L'invention se rattache au secteur technique des équipements et outillages à main, et pour machines agencées pour recevoir des outils de toute nature et d'applications diverses susceptibles d'être utilisées pour effectuer des opérations de découpe sur des pièces en tous matériaux métalliques ou non, en carton ou autres.

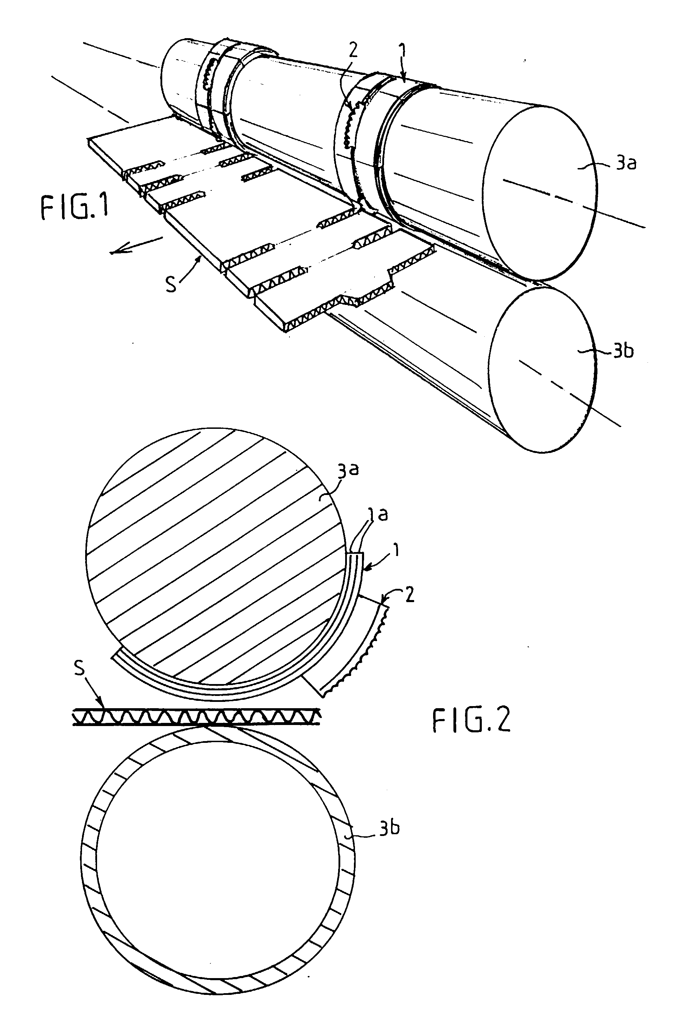

II est bien connu de réaliser des emporte-pièces trouvant notamment une application sur des cyclindres rotatifs pour la découpe de papier cartonné ou similaires. Ces cylindres intégrés dans le cadre de machines sophistiquées tournent en sens opposé en permettant l'avancement et le traitement de supports (S) en tous matériaux dans lesquels des opérations de découpe sont à effectuer à l'aide d'outils et contre-outils. A cet effet, ces outils sont disposés sur des plaques supports ou préformes qui sont généralement réalisées en bois à partir de lamelles assemblées. Ces préformes de forme curviligne, pour s'adapter à la section des cylindres, sont rapportées et fixées à l'aide de tous moyens appropriés. On a représenté figure 1 une telle préforme (1) dans l'application considérée. Le long des cylindres (3a - 3b) sont disposées une pluralité de préformes identiques qui reçoivent les outils (2) en recouvrant la totalité ou partiellement la surface des cylindres (3a - 3b).

Cette technique qui est couramment utilisée depuis de nombreuess années présente des inconvénients.

Tout d'abord, les coûts de fabrication de ces préformes sont importants en fonction des caractéristiques des outils qu'elles supportent.

II faut en effet procéder à la réalisation d'ébauches en bois à partir de différentes lamelles (1a) qui sont associées par collage ou autre. II faut ensuite effectuer des opérations d'usinage par fraisage ou autre afin de donner les caractéristiques souhaitées.

La mise en place des outils exige des opérations de découpe qui peuvent s'effectuer par laser ou autres moyens équivalents pouvant entraîner selon les cas des détériorations notamment dans les zones fragiles de la préforme.

Un autre inconvénient de ces préformes en bois réside dans leur fragilité à un environnement humide qui existe en cas de stockage dans des lieux accessibles à l'environnement extérieur ou dans le cas de projection d'eau par fuite ou autres. Cette nuisance se retrouve également lorsqu'il est rendu nécessaire de nettoyer les préformes régulièrement par suite de l'apparition de sciure, de projection d'huile. Elles ne redeviennent utilisables qu'après une longue période de séchage ce qui rend leur utilisation peu pratique et exige des stocks réellement plus importants que nécessaire. De telles situations peuvent également contribuer à modifier les caractéristiques dimensionnelles de la préforme. Par ailleurs, la mise en place des outils ne peut s'effectuer que lorsque les préformes en bois sont séchées, sinon il y aurait un risque d'apparition de jeux indésirés contribuant à l'instabilité des outils.

Un autre inconvénient peut résider dans l'instabilité du maintien des outils en cas de sollicitations ou de déformations de la préforme en bois, dues par exemple à des variations de température ou d'hygrométrie.

Un autre inconvénient réside dans l'exigence d'une standardisation des caractéristiques de formes et de dimensions des préformes en bois pour assurer une maîtrise des coûts de fabrication.

L'ensemble de ces inconvénients, qui ne sont pas rédhibitoires puisque cette technologie est utilisée, a néanmoins amené le Demandeur à s'intéresser à une solution de substitution qui offre des avantages conséquents tant au niveau des coûts de production, des caractéristiques de tenue des outils et de la diversité des formes et dimensions de ces préformes.

Une première approche a orienté le Demandeur sur la fabrication de préformes ou supports d'emporte-pièces en un matériau thermoplastique. Des propositions et études ont été réalisées dans le passé mais n'ont pas permis de trouver un matériau fiable satisfaisant répondant aux contraintes de fabrication, d'utilisation et de mise en place des outils en leur garantissant en toutes circonstances une tenue parfaite.

C'est par suite de cette insuffisance de résultats que les préformes en matière plastique n'ont pu être utilisées permettant de conserver la technologie traditionnelle du bois.

Le Demandeur, malgré cette analyse défavorable, a néanmoins procédé à de nouvelles recherches allant ainsi à l'encontre des études, essais connus, pour tenter d'identifier et de trouver une possibilité de réalisation satisfaisante de ces préformes, en un matériau autre que le bois.

C'est ainsi que le Demandeur, après diverses recherches, études et analyses, a pu identifier et sélectionner un type de matériau répondant aux objectifs recherchés et appropriés pour offrir d'autres avantages le rendant particulièrement apte à remplacer, dans des conditions économiques et techniques très satisfaisants, les préformes actuellement existantes pour la réalisation de plaques support d'emporte-pièces.

Selon une première caractéristique de l'invention, la plaque support d'emporte-pièces est remarquable en ce qu'elle est fabriquée par moulage en une seule fois et d'une manière définitive en un matériau thermodurcissable, la plaque support formant préforme étant de toutes dimensions et profils.

Selon une autre caractéristiques de l'invention, le matériau thermodurcissable est choisi dans la famille des polydicyclopentadiène, connu sous les marques "TELENE" ou "MASTERSHOCK".

Ces caractéristiques et d'autres encore ressortiront bien de la suite de la description.

Pour fixer l'objet de l'invention illustré non limitativement aux figures des dessins où :

La figure 1 est une vue à caractère schématique illustrant selon l'art antérieur l'application de la plaque support d'emporte pièces réalisée en bois à partir de lamelles, montée sur un cylindre tournant en rotation à l'encontre d'un cyclindre inférieur formant contre-outil.

La figure 2 est une vue à caractère schématique d'un ensemble de cylindres rotatifs équipés selon l'art antérieur.

La figure 3 est une vue d'une plaque support d'emporte-pièces selon l'invention dans une configuration curviligne.

La figure 4 est une vue semblable à celle de la figure 3 dans laquelle la plaque support est représentée dans une configuration aplatie.

La figure 5 est une vue en variante montrant une disposition avantageuse par emboîtement de diverses plaques supports selon l'invention.

La figure 6 est une vue en variante d'une découpe à plat.

Afin de rendre plus concret l'objet de l'invention, on le décrit maintenant d'une manière non limitative aux figures des dessins.

La plaque support d'emporte-pièce est référencée dans son ensemble par (5). Elle est réalisée par moulage aux formes et dimensions souhaitées en un matériau thermodurcissable et en particulier celui de la famille des polydicyclopentadiène ou DCPD. Ce matériau est notamment commercialisé sous les marques "TELENE" de GOODRICH ou "MASTERSHOCK" du Demandeur. Ce matériau obtenu par résine liquide dont la matière première est le DCPD, est mis en oeuvre par la technologie RIM (réaction-injection-moulding) ou RTM (réaction-transfert-moulding). La plaque support d'emporte-pièces obtenue par la sélection particulière de ce matériau, offre de nombreux avantages. Elle présente d'excellentes propriétés physiques et chimiques, de résistance aux chocs, de résistance à la traction, de résistance thermique, chimique, et des propriétés d'isolation électrique.

Cette sélection permet de réaliser par moulage des plaques-supports à l'aspect final définitif, sans nécessiter des opérations complémentaires d'usinage, selon des formes variées, simples, enchevêtrées ou autres, plates, curvilignes, s'adaptant dans tous les cas aux formes souhaitées sur lesquelles elles s'adaptent par exemple de cylindres tournants. Les plaques supports peuvent être découpées très facilement au laser, au jet d'eau ou autre, d'une manière très précise, pour permettre l'adaptation et la fixation d'outils (2) de découpe. Ces opérations peuvent être effectuées sans dommage, même si la plaque support ou préforme est humide. II n'y a aucune modification des caractéristiques structurelles ou physiques à l'état humide suite à des opérations de lavage, nettoyage ou de stockage en lieu humide, ou autre.

En outre, l'outil de découpe, lorsqu'il est monté dans la plaque support dans une ouverture appropriée (5a), est parfaitement maintenu par une pression constante malgré les variations de température et d'hygrométrie.

Un autre avantage de l'invention réside dans l'élasticité que peut présenter la plaque support, si elle est profilée curviligne par exemple, pour se fixer sur le ou les cylindres rotatifs. En jouant sur son élasticité, on peut très facilement exécuter le montage de l'ensemble. En outre, le choix du matériau permet sa fixation par cloutage, sans difficulté ou destruction particulière.

Les coûts de fabrication des plaques supports d'emporte-pièces selon l'invention sont très compétitifs puisqu'indépendamment du moule, il n'y a pas d'autre source d'intervention, comme cela est le cas dans l'art antérieur où les préformes sont à l'état d'ébauche et nécessitent un usinage complémentaire.

Selon l'invention, le marquage des plaques est aisé ce qui offre la possibilité d'une identification personnalisée. II est en outre très facile de faire apparaître sur les plaques des lignes (5b) de repérage pour faciliter leur positionnement sur le cylindre et leur fixation.

Selon l'invention, les plaques supports d'emporte-pièces sont réalisées en une seule fois en offrant toutes les caractéristiques possibles de variation de formes et de dimensions.

Les plaques supports sont indéformables, offrent une bonne résistance aux acides et permettent un nettoyage aisé. Leurs extrémités peuvent par ailleurs facilement s'emboîter par des formes complémentaires d'assemblage (5c).

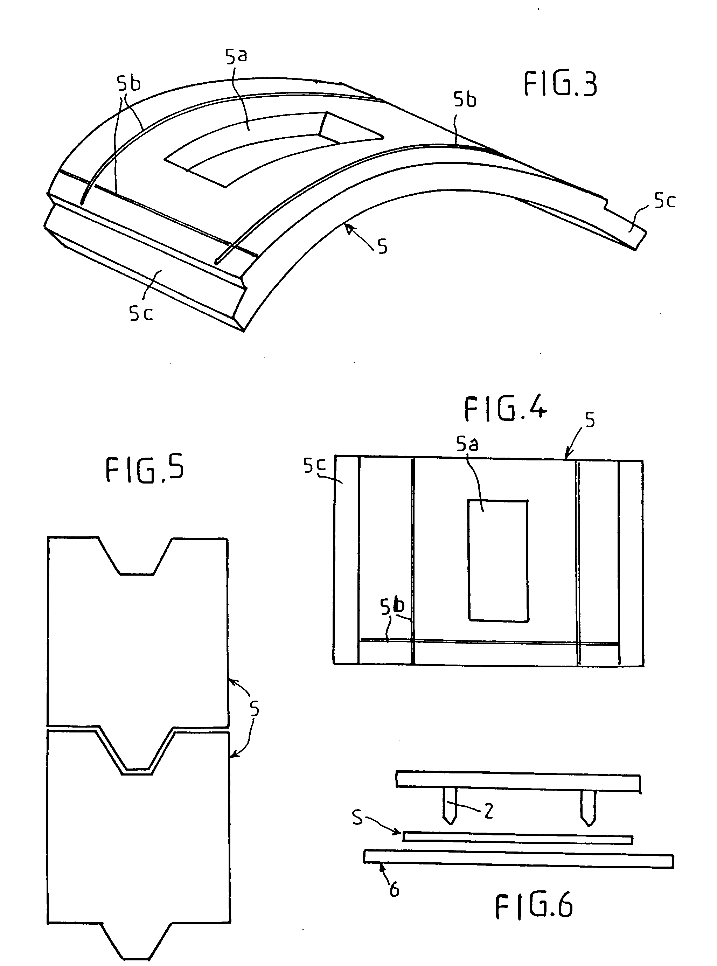

On a représenté figure 6 la plaque-support (5) plate recevant les outils de découpe (2) tels que lame emmanchée susceptible d'être sollicitée pour la découpe d'un matériau (S) sur une table de massicot (6).

## Revendications

1. Plaque support d'emporte-pièces, fabriquée par moulage en une seule fois et d'une manière définitive en un matériau thermodurcissable, la plaque support (5) formant préforme étant de toutes dimensions et profils, **caractérisée en ce que** le matériau thermodurcissable est choisi dans la famille de polydicyclopentadiène.

2. Plaque support selon la revendication 1 caractérisé en ce que le matériau thermodurcissable est choisi dans la famille des polydicyclopentadiène connu sous les marques «TELENE» ou «MASTERSHOCK».

3. Plaque support d'emporte-pièces, selon l'une quelconque des revendications 1 et 2, caractérisée en ce qu'elle présente des lignes de repérage (5b), des ouvertures (5a) pour la réception d'outils et des profils d'extrémités (5c) d'assemblage.
